(19) Europäisches Patentamt
European Patent Office
Office européen des brevets

(11) Publication number: **0 515 095 A1**

(12) # EUROPEAN PATENT APPLICATION

(21) Application number: **92304358.2**

(22) Date of filing: **14.05.92**

(51) Int. Cl.$^5$: **C08L 33/24,** C08L 25/12, // (C08L33/24, 25:12)

(30) Priority: **16.05.91 US 701391**

(43) Date of publication of application: **25.11.92 Bulletin 92/48**

(84) Designated Contracting States: **AT BE CH DE ES FR GB IT LI NL SE**

(71) Applicant: **ROHM AND HAAS COMPANY**
**Independence Mall West**
**Philadelphia Pennsylvania 19105 (US)**

(72) Inventor: **Johnson, Phelps Brian**
**138N. Timber Road**
**Holland, Pennsylania 18966 (US)**

(74) Representative: **Angell, David Whilton et al**
**ROHM AND HAAS (UK) LTD. European Operations Patent Department Lennig House**
**2 Mason's Avenue**
**Croydon CR9 3NB (GB)**

(54) **Polymer blends for optical applications.**

(57) Certain blends of styrene (and/or substituted styrene)-(meth)acrylonitrile copolymers and polyglutarimide polymers give an attractive balance of properties for optical applications.

EP 0 515 095 A1

This invention is concerned with polymer blends which are useful when optical properties are important, such as in optical information storage discs, optical fibres, lenses and instrument panels.

Clear thermoplastic polymers for optical applications are facing new demands and growing applications due to the rapid growth of optoelectronic technologies. Foremost among these is the recording, conveying and storing of information on optical discs. Performance requirements of optical disc substrates differ from those of typical clear thermoplastics. Optical discs require excellent clarity, low index of double refraction (birefringence), low water absorption, excellent fluidity and mold releasing ability for molding operations, and good heat resistance. Other important properties include good abrasion resistance and good adhesion by thin metallic layers on the surface of the discs. The quality of thermoplastic optical structures is greatly enhanced if the refractive index of the structure is independent of light polarization. The polarization-dependence is described by several related terms: optical retardation, birefringence, optical anisotropy or index of double refraction. Unpolarized light traversing a molded part of a thermoplastic resin will undergo a certain optical retardation of one polarization relative to another. This net optical retardation is a complex product of the fundamental birefringence (inherent optical anisotropy of a representative polymeric chain segment), the net orientation of the material and the thickness of the part (distance travelled by light). In this specification "birefringence" will be used when discussing inherent material properties and "retardation" will be used when discussing measurements.

It is that low optical retardation, may be obtained by lowering molecular weight, modifying a component of the polymeric chain to give it lower optical anisotropy, or copolymerizing constituents which possess optical anisotropy of opposite signs in injection parts. Miscible blends of two polymers, each possessing net optical anisotropy of opposite signs, are also known to provide materials of low birefringence.

There are many difficulties in the practical application of miscible systems. Many blends are deficient in one or more of the following areas for demanding optical applications: they do not offer low birefringence, good moisture-related dimensional stability, good overall optics or develop significant haze (due to phase separation) under practical processing conditions. To improve the clarity achieved under practical processing conditions, blends with constituents which are close in refractive index are usually used. Using blend constituents which are close in refractive index reduces the degree of compatibility which is required for good clarity.

Substrate adhesion to sputtered metal is a problem seldom addressed in the optical disc substrates patent literature. Sputtering is currently the metallization method of choice for the production of CD audio discs. Scratch resistance is also important to the long-term durability of optical structures.

This invention is directed to the provision of clear, miscible polymer blends with an attractive combination of properties of low birefringence, good adhesion to sputtered metal, good scratch resistance and good moisture related dimentional stability.

Compatibility of glutarimide-containing polymers with ($\alpha$-methyl)styrene-acrylonitrile copolymers is disposed in several references.

U.S.-A-4,954,574 teaches glutarimide-containing polymers wherein the degree of imidization ranges from about 1% to 95% and having an acid and anhydride content lower than the acid and/or anhydride content normally present in the polyglutarimide polymers. It suggests in column 9 beginning about line 25, blending the low acid and anhydride content polyglutarimide polymers with many other thermoplastic polymers including sytrene/acrylonitrile (SAN) copolymers.

U.S.-A-4,436,871 (Staas) teaches miscibility or partial solubility of glutarimide-containing copolymers with styrene-acrylonitrile polymers.

M .E. Fowler, D. R. Paul, L. A. Cohen and W. T. Freed, in J. Appl. Poly.Sci. 37, 513-525 (1989), outlined various issues surrounding glutarimide/MMA copolymer compatibility with various SAN compositions. Compatibility is dependent upon both glutarimide content of the glutarimide/methyl methacrylic copolymer and the styrene content of the SAN copolymer.

None of the above references however suggests that complete or near-complete compensation of optical anisotropy may occur in compositions which combine excellent clarity, low moisture uptake, good adhesion of sputtered metal, and good scratch resistance. Each of these features is important to polymer use in one or more optical applications. More broadly, low-birefringence in blends of (a) glutarimide copolymers which do not contain aromatic groups with (b) aromatic-containing copolymers, has also not been taught.

Most blends of glutarimide copolymers with ($\alpha$-methyl)styrene-acrylonitrile copolymers are not completely miscible over all or part of their compositional range and yield parts with high optical retardation under practical molding conditions. We have now surprisingly found certain clear, miscible blends of these materials in which the birefringence of the net composition is significantly reduced relative to the neat constituents.

Blends of the invention having good optical quality and comprising polymeric constituents of both strongly opposing optical anisotropies & widely differing refractive indices, yet do not require the presence of additional compatibilizers.

The compositions of this invention comprise blends containing (a) from about 40 to about 85 parts by weight

of polyglutarimide polymer containing imide units of the structural formula

I

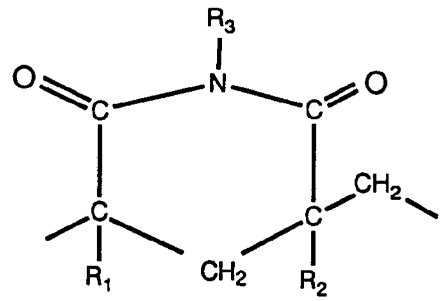

wherein $R_1$, $R_2$ and $R_3$ are the same or different and may be hydrogen or ($C_1$ to $C_{20}$), substituted or unsubstituted, alkyl, aryl, alkaryl or aralkyl. The substituents if present, may be selected from the group consisting of methyl, ethyl, hydroxyl, methoxy, ethoxy, halo, caroxyl and ethylcarbonyl; the degree of imidization is at least 40% and the milliequivalents of acid and anhydride per gram of imidized and imidizable polymer component do not exceed 0.40; (b) from about 60 to about 15 parts of styrene (or substituted styrene)-(meth)acrylonitrile copolymer; and (c) optionally one or more additives.

The blends of this invention will be non-opaque and preferably will be transparent or optically clear for certain applications such as audio and optical discs. Other blends within the scope of this invention may not be wholly transparent and may be tinted, toned or colored for other applications such as lenses and instrument panels.

Preferred blends will contain from about 50 to about 90 weight percent polyglutarimide polymer (based on blend) wherein the nitrogen content is in the range of from about 5.5% to about 7.0% (based on glutarimide polymer) and will contain acrylonitrile in an amount of from about 20 to about 30 weight percent of the SAN copolymer. Yet more preferably the SAN copolymer will contain from about 22 to about 27 weight percent acrylonitrile. Within these guidelines the optical disc properties as defined by the glass transition temperature and molding conditions define the desired optical retardation range quite well.

A blend of the invention which is clear and miscible will, after shpaing (molding) have a single glass transition temperature (Tg) as measured by DSC (differential scanning calorimetry), however, some blends which exhibit haze upon extrusion (indicative of phase separation) also do not yield a discernible second glass transition temperature.

Because of unfavorable thermodynamics, i.e. small entropy of mixing, highly miscible polymer-polymer solutions are rare. Great effort has gone into developing methods to predict polymer-polymer miscibility via complex cohesive energy density calculations, but the calculations are approximate at best.

It is surprising to find that some glutarimide polymer/SAN blends possess a good property balance for optical disc applications: excellent clarity, low optical retardation, low moisture absorption, good heat resistance and good adhesion to sputtered aluminum and a wide processing temperature range. This finding is unexpected, since no simple relationships exist to predict either the birefringence or adhesion properties. Both properties vary dramatically with polymer composition.

Polymer compositions providing low birefringence will depend upon both the imidization level of polyglutarimide and SAN composition, and many polymer compositions are deficient in one or more of the properties required for optical discs. Many of the aforementioned properties are also advantageous in lenses, fiber optics, display panels, automotive instrument cluster lenses, etc. Glutarimide polymers of the formula I can be made with various degrees of imidization as shown by the prior art discussed hereinbefore. Often the degree of imidization is indicated by the percent nitrogen in the polymer. The preferred nitrogen range in the glutarimide polymers is above about 4.5% N by weight more preferably the percent nitrogen is from about 6.4% N to about 8.0% N. Polymer blend applications which seek better appearance, especially under polarized light (display panels and automotive instrument clusters, etc.), would principally benefit from compositions with about 10-80 wt % SAN based on blend weight. Applications with more demanding birefringence constraints (optical discs, fiber optics, lenses, etc.), would principally benefit from compositions with from about 20-50 wt % SAN based on blend weight.

To improve the abrasion resistance of any article molded (shaped) from the polyglutarimide-SAN blends of this invention, the molded article may be coated with any of many known materials such as those listed in a publication entitled Abrasion Resistant Coatings for XHTA Plastic Materials, October 11, 1984.

The preferred glutarimide polymers are those which are prepared from acrylic polymer such as poly(methyl

methacrylate) and copolymers thereof by reaction with ammonia or methyl amine so that about 40% to about 95% of the acrylic ester groups are imidized. The weight average molecular weights of the glutarimide polymers are typically from about 80,000 to about 200,000.

The glutarimides used in the polymer blends of this invention preferably have a degree of imidization (weight percentage of imide groups on the polymer in relation to the groups on the unimidized polymer capable of being reacted to form imide groups) from about 50 to about 95%, and, more preferably, from about 70 to about 80% . More preferably the polyglutarimides will contain low levels of acid and anhydride as described in U.S.-A-4,954,574.

When the degree of imidization of a polymer is 95% or less, then the amount of acid and anhydride functionality normally present on the polymer chain as a natural incidence of the reaction involved becomes objectionable in that the presence of acid and anhydride functionality generally adversely affects the properties of the polyimide. For example, the presence of the normal amount of acid and anhydride functionality on an imide or polyglutarimide polymer will alter the miscibility of such polymer with other thermoplastic polymers. Additionally, acid and anhydride functionality affects the molded article prepared from such polymer in that the molded article will absorb more water as a result of the presence of the normal amount of acid and anhydride functionality can result in higher melt viscosity which would translate into the polymer being more difficult to process into various molded articles.

Therefore it is preferred that the glutarimide copolymer in the blends contains glutarimide units wherein the degree of imidization, by weight, on said polymer, and the acid and anhydride functionality on said polymer, expressed in milli-equivalents per gram of imidizable components in said polymer, as set forth below

| when the degree of imidization on said polymer is | the milliequivalents of acid and anhydride per gram of imidizable polymer component are |
|---|---|
| above about 40% to about 50% | 0 to about 0.28 |
| above about 50% to about 60% | 0 to about 0.28 |
| above about 60% to about 70% | 0 to about 0.27 |
| above about 70% to about 80% | 0 to about 0.28 |
| above about 80% to about 90% | 0 to about 0.33 |
| and above about 90% to about 95% | 0 to about 0.40 |

The SAN copolymer used in the polymer blends of this invention preferably contains between about 20 wt % acrylonitrile (AN) and about 30 wt % AN and, more preferably, about 22 wt % AN to about 27 wt % AN. Substituted styrenes especially lower alkyl and/or halo-substituted styrenes can be used in combination with styrene or in place thereof, and the invention extends to this option. Likewise, part or all of the acrylonitrile in the SAN polymer can be replaced by methacrylonitrile.

The polymer blends of this invention may be produced by conventional melt or solvent blending techniques. The compositions can also include the usual additives, for example, stabilizer, colorant, pigment, lubricant and anti-static agent. Unless otherwise specified in the Examples, blends were prepared on a single screw 2.032 cm (0.8") -diameter Killion extruder operated at 80 rpm and molded on a 30,480 kg (30-ton) Newbury injection molding machine using a standard ASTM mold. Processing temperatures are provided in the tables which accompany the Examples.

In the Examples which follow, certain tests are conducted. These tests are as follows:

The total acid and free acid was determined by titrating solutions of polymers. Anhydride functionality is calculated by multiplying the difference of total acid-free acid by the factor 1.79. In the samples the end point of the titration was detected potentiometrically.

Molecular weight is determined by gel permeation chromatography using a commercial Waters instrument and a tetrahydrofuran solvent, and is a weight average molecular weight.

Nitrogen content of the polyglutarimide polymers and the styrene-acrylonitrile polymers is determined using a Carlo Erba NA 1500 Nitrogen Analyzer. The weight percent N-methyl glutarimide in the glutarimide polymers is the % N multiplied by 11.9377, whereas the weight percent AN in SAN is the % N times 3.7884. These multiplication factors are the weight ratios of the glutarimide and acrylonitrile moiety monomer, respectively, to that of the nitrogen atoms within those groups.

<u>Imide</u>: %N→ % Imide

Methyl Glutarimide

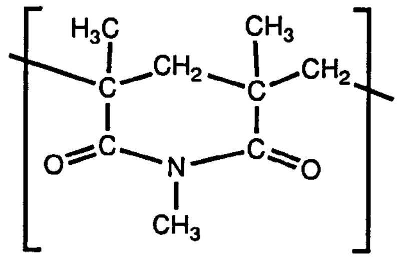

$C_9H_{13}O_2N$
167.207

$$\% \text{ Imide} = \frac{167.207}{14.0067} \times \% \text{ N} = 11.9377 \times \% \text{ N}$$

$$\underline{\text{Ammonia Imide}}\ \% \text{ Imide} = \frac{153.180}{14.0067} \times \% \text{ N} = 10.9362 \times \% \text{ N}$$

<u>SAN:</u> %N→ % SAN

$$\% \text{ AN} = \% \text{ N} \times \frac{\text{Wt. AN}}{\text{Wt. N}} = \% \text{ N} \times \frac{53.0636}{14.0067} = \% \text{N} \times 3.7884$$

The glass transition temperature (Tg) of polymer and blend samples is determined by differential scanning calorimetry (DSC), using a Perkin-Elmer Model DSC-2 calorimeter. The sample is heated in a nitrogen atmosphere at 20° C. per minute, and the reference material in the calorimeter is 60-80 mg aluminum. The Tg value is taken from the DSC chart as the temperature at the midpoint of the transition. All blend samples prior to the DSC run, are preheated for one minute at a temperature 20° C. higher than the higher Tg value for either component in the bland, and then cooled to a temperature below the lower Tg value of either component. The reported Tg in the tables are the midpoint.

The DSC values for Tg are usually sufficient to indicate whether a blend is miscible. However, if the Tg values of the two components are similar, or if one of the components undergoes a phase change (e.g. melting or recrystallization) near the Tg of the other component, the DSC result may not be adequate to detect whether the sample is miscible.

The best indicator of miscibility is optical clarity for blends claimed herein. SAN and glutarimide polymers are quite mismatched in refractive index, and severe haze may be seen in blends before a second glass transition temperature, also indicative of phase separation, is clearly discernible by DSC

Optical retardation measurements are performed using a circular polariscope, constructed in-house, a white light source and a hand-held wedge-type compensator (SWC-100, Strainoptic Technologies). Retardation is measured at the center of injection-molded plaques (7.6 x 5.1 x 0.3 cm), which are prepared on a 30,480 kg (30-ton) Newbwy injection-molding machine. Several plaques are stacked to decrease the measurement error. Optical retardation values shown are thus averages, and are rounded to the nearest 10 nanometers (nm). As a reference point, a limit of 50 nm is specified for CD-audio discs, although direct translation of values reported herein to this specification are not intended. Rather, the measurements are indicative of relative material quality.

Deflection Temperature under Mexural Load, or DTUFL, is conducted as described in ASTM D-648, using a heating rate of 2°C/min., 18x10$^5$ N/m$^2$ (264 psi) and unannealed 12.7 x 1.3 x 0.6 cm (5 x 0.5 x 0.25") injection-molded bars. The test bars are prepared on a 30,480 kg (30-ton) Newbury injection-molding machine.

Vicat is determined by ASTM Test Method 152565T using 1 mm (40 mil) penetration and heating rate B. When samples are exposed to moisture prior to testing, an exposure of approximately 2200 hours is employed.

Water uptake measurements are performed upon injection-molded plaques (7.6 x 5.1 x 0.3 cm), using a ± 0.1 mg digital electronic balance. Values employed herein were acquired after ~2240 hours, of immersion at 50°C (near equilibrium).

Abrasion is studied using the Taber test, ASTM Method D1044. This employed 10.16 cm (4") diameter x 0.3175 cm (1/8") thick injection-molded discs, prepared on a 76,200 kg (75-ton) Stokes injection molding machine and a Teledyne Taber Model 505 abrasion tested with a CS-10F wheel and 125 g applied force.

Percent haze and percent total white light transmittance (% TWLT) are performed using a Hunter Colorimeter Model D259P or a Pacific Scientific Hazegard® XL-211 meter.

Aluminum is sputtered onto injection-molded plaques (7.6 x 5.1 x 0.3 cm) using a Sputtered Films Inc. Research S-Gun sputter deposition system. Adhesion of the metallized layer is tested by placing a piece of 3M Scotch™-brand Magic Tape upon the metallized surface and pulling it back upon itself. Slow and fast-peel are subjective quantities. A "scored" surface is one in which a grid of ~2 mm squares is scribed through the metallized surface to generate initiation sites for adhesive failure.

In the following Examples, which are given solely to illustrate the present invention, all proportions and percentages are by weight, unless otherwise indicated, and all reagents used are of good commercial quality.

The following abbreviations used in the Examples and Tables are:

Imides - N - methylglutarimide polymers
k - 1000
pmma - polymers of methyl methacrylate
AN - Acrylonitrile
SAN - polymers of styrene-acrylonitrile
MW - weight average molecular weight
% AN - percent acrylonitrile in SAN polymer
%N - percent nitrogen in imide and SAN polymers
%Anh - percent anhydride in imide polymer
Tg - glass transition temperature in degrees C
DTUF - deflection temperature under flexural load
TWLT - total white light transmittance
RTD - optical retardation-complex product of fundamental birefingence, net orientation of material and thickness of injection molded placques rounded to nearest 10 nanometers
nm - nanometers
n.m. - not measured

EXAMPLES

Examples 1 to 5 - POLYGLUTARIMIDE CONTAINING POLYMERS

Polyglutarimide containing polymer may be made by known methods.

TABLE I - POLYGLUTARIMIDE POLYMERS

| Ex. | Tg°% | %N | % Imide | % free Acid | % Anh. | Mw (k) |
|---|---|---|---|---|---|---|
| 1 | 128 | 4.7 | 56 | 0.3 | 0.5 | 91 |
| 2 | 146 | 6.4 | 76 | 0.2 | 0.5 | 132 |
| 3 | 160 | 7.5 | 89 | 0.2 | 0.5 | 124 |
| 4 | 154 | 7.0 | 84 | 0.2 | 0.5 | 83 |
| 5 | 146 | 6.5 | 77 | 0.2 | 0.5 | 138 |

Examples 6 to 9 STYRENE-ACRYLONITRILE-(SAN) COPOLYMERS

Table II presents the AN levels and molecular weights of various commercial styrene-acrylonitrile (SAN) copolymers employed in the blends.

## TABLE II- STYRENE ACRYLONITRILE COPOLYMERS

| EX. | Tg°C | %N | wt %AN | Mw (k) |
|---|---|---|---|---|
| 6 | 110 | 6.6 | 25 | 311 |
| 7 | 111 | 8.6 | 32 | 210 |
| 8 | 108 | 6.2 | 24 | 262 |
| 9 | 110 | 6.1 | 23 | 168 |

Examples 10 to 35 - POLYGLUTARIMIDE - SAN BLENDS

Examples 10 to 35 demonstrate the optical retardation behavior for SAN blends with three different polyglurarimide polymers. Low imidization level results in good compensation in materials of diminished thermal resistance, whereas high imidization results in samples of poor clarity under practical injection molding conditions when using conventional styrene-acrylonitrile copolymers. The series of blends of a styreneacrylonitrile copolymer, listed in Table II as Example 6, and several N-methylglutarimide polymers (Table I, Examples 1-3) were prepared on a 2.032 cm (0.8″) Killion extruder at 80 rpm and pelletized. The blend compositions, processing conditions, and their physical properties are presented in Table III. Injection-molded parts of dimension 7.6 x 5.1 x 0.3 cm (3 x 2 x 1/8 in) and 12.7 x 1.2 x 0.6 cm (5 x 0.5 x 0.25 in, for optical and heat-resistance - ASTM D648, $18x10^5$ $N/m^2$ (264 psi) - measurements, respectively, were prepared on a 30,480 kg (30-ton) Newbury injection molding machine from the pelletized blends.

For the imide of Examples 10-18, which has low molecular weight and is 56 wt. % of glutarimide (4.7 wt. % nitrogen) and less than 10% SAN fully compensated the birefringence of the glutarimide component of the blend. For the imide of Examples 19-27, which has high molecular weight and 89 wt % glutarimide (6.4 wt % nitrogen) between 30 and 40 weight % SAN is required for optimal compensation, but the good clarity of examples 10-27 was lost in the low optical-retardation compositions. Examples 13(a-c) and 31(a-c) demonstrate that molding temperature changes may influence the magnitude of measured optical retardation, but do not alter its sign. Examples 31(a-c) also demonstrate that the haze in compositions of marginal miscibility are adversely affected by increasing molding temperature. Example 26 illustrates how addition of 30% glutarimide copolymer to SAN significantly reduces the retardation and increases the heat resistance relatively to neat SAN (Example 27). These properties are of value in modern automotive instrument clusters and lenses.

Table III

| Ex. | Imide Source (Ex. #) | SAN Source (Ex. #) | wt % Imide in Imide | wt% AN in SAN | Imide/SAN Wt. Ratio | Extrusion Barrel Temp. (°C) | Injection Molding Barrel Temp. (°C) | Injection Molding Mold Temp. (°C) | Tg (°C) | DTUFL (°C) | % Haze | % TWLT | RTD^^ (nm/ plaque) |
|---|---|---|---|---|---|---|---|---|---|---|---|---|---|
| 10 | 1 | 6 | 56 | 25 | 100/0 | 238 | 249 | 71 | 126 | 104 | 0.6 | 92 | 30 |
| 11 | " | " | " | " | 90/10 | 238 | 249 | 71 | 124 | 106 | 0.7 | 91 | -20 |
| 12 | " | " | " | " | 80/20 | 238 | 249 | 68 | 126 | 104 | 0.7 | 91 | -50 |
| 13a | " | " | " | " | 70/30 | 238 | 241 | 66 | 125 | 104 | 0.7 | 90 | -120 |
| 13b | " | " | " | " | " " | " " | 260 | 66 | " | 103 | 0.8 | 90 | -50 |
| 13c | " | " | " | " | " " | " " | 277 | 71 | " | 104 | 1.0 | 90 | -40 |
| 14 | " | " | " | " | 70/30 | 249 | 241 | 66 | 122 | 101 | 0.6 | 90 | -100 |
| 15 | " | " | " | " | 70/30 | 260 | 241 | 66 | 127 | 103 | 0.6 | 90 | -110 |
| 16 | " | " | " | " | 60/40 | 238 | 238 | 66 | 122 | 100 | 0.9 | 90 | -180 |
| 17 | " | " | " | " | 30/70 | 238 | 238 | 66 | 116 | 95 | 1.1 | 88 | -280 |
| 18 | " | " | " | " | 0/100 | --- | 238 | 63 | 110 | 88 | 2.5 | 88 | -370 |
| 19 | 2 | 6 | 76 | 25 | 100/0 | 238 | 243 | 73 | 146 | 120 | 1.1 | 91 | 410 |
| 20 | " | " | " | " | 90/10 | 238 | 243 | 72 | 142 | 118 | 1.1 | 91 | 230 |
| 21 | " | " | " | " | 80/20 | 238 | 249 | 69 | 138 | 113 | 1.0 | 90 | 40 |
| 22a | " | " | " | " | 70/30 | 238 | 241 | 66 | 133 | 111 | 0.8 | 90 | -30 |
| 22b | " | " | " | " | " " | " | 260 | 67 | " | 110 | 0.9 | 90 | -30 |
| 22c | " | " | " | " | " " | " | 288 | 68 | " | 111 | 0.8 | 89 | -10 |
| 23 | " | " | " | " | 70/30 | 247 | 241 | 67 | 132 | 111 | 0.7 | 90 | -30 |
| 24 | " | " | " | " | 70/30 | 262 | 241 | 67 | 132 | 111 | 1.0 | 90 | -30 |
| 25 | " | " | " | " | 60/40 | 238 | 238 | 66 | 129 | 107 | 0.8 | 89 | -140 |
| 26 | " | " | " | " | 30/70 | 238 | 238 | 66 | 119 | 100 | 0.9 | 88 | -280 |
| 27 | " | " | " | " | 0/100 | 238 | 232 | 63 | 110 | 91 | 0.9 | 87 | -380 |
| 28 | 3 | 6 | 89 | 25 | 100/0 | 249 | 254 | 77 | 155 | 132 | 0.8 | 89 | 650 |
| 29 | " | " | " | " | 90/10 | 249 | 249 | 77 | 149* | 125 | 1.9 | 87 | 500 |
| 30 | " | " | " | " | 80/20 | 249 | 254 | 74 | 147* | 118 | 28 | 59 | 180 |
| 31a | " | " | " | " | 70/30 | 247 | 243 | 71 | 142* | 117 | 52 | 46 | 70 |
| 31b | " | " | " | " | " " | " | 260 | 71 | " | 111 | 79 | 35 | 60 |
| 31c | " | " | " | " | " " | " | 288 | 71 | " | 120 | 91 | 29 | 60 |
| 32 | " | " | " | " | 70/30 | 260 | 243 | 71 | 139** | 118 | 45 | 49 | 70 |
| 33 | " | " | " | " | 70/30 | 270 | 243 | 71 | 140** | 116 | 52 | 46 | 70 |
| 34 | " | " | " | " | 60/40 | 249 | 243 | 71 | 132* | 112 | 80 | 38 | -60 |
| 35 | " | " | " | " | 30/70 | 248 | 238 | 68 | 117 | 99 | 96 | 39 | -290 |

?? *very broad transition (onset-midpt). ≥ 10°C ** As above, but with a second Tg more evident ^^Rounded to nearest 10

Examples 36 to 62 - POLYGLUTARIMIDE-SAN BLENDS

Examples 36 to 62 demonstrate that small changes in the SAN constituent cause poor clarity/high haze in blends with the glutarimide polymers of Examples 1-3. These examples were prepared in the same fashion as Examples 10 to 35, except that a different styrene-acrylonitrile copolymer (Example 7 in Table II) was employed as the SAN constituent. Parts were molded as in Examples 10-35. The blend compositions, processing conditions, and their physical properties are presented in Table IV.

Table IV

| Ex. | Imide Source (Ex. #) | SAN Source (Ex. #) | wt % Imide in Imide | wt% AN in SAN | Imide/SAN Wt. Ratio | Extrusion Barrel Temp. (°C) | Injection Molding Barrel Temp. (°C) | Injection Molding Mold Temp. (°C) | Tg (°C) | DTUFL (°C) | % Haze | % TWLT | Retardation^^ (nm/plaque) |
|---|---|---|---|---|---|---|---|---|---|---|---|---|---|
| 36 | 1 | 7 | 56 | 32 | 100/0 | 238 | 243 | 71 | 131 | 109 | 0.7 | 93 | 30 |
| 37 | " | " | " | " | 90/10 | 238 | 243 | 69 | 130 | 100 | 97 | 40 | n.m. |
| 38 | " | " | " | " | 80/20 | 238 | 243 | 69 | 129 | 102 | 99 | 30 | n.m. |
| 39a | " | " | " | " | 70/30 | 238 | 241 | 67 | 126 | 102 | 99 | 24 | n.m. |
| 39b | " | " | " | " | " " | 249 | 260 | 68 | " | 105 | 98 | 26 | n.m. |
| 39c | " | " | " | " | " " | 263 | 288 | 69 | " | 102 | 100 | 28 | n.m. |
| 40 | " | " | " | " | 70/30 | 238 | 241 | 67 | 124 | 102 | 99 | 24 | n.m. |
| 41 | " | " | " | " | 70/30 | 238 | 241 | 67 | 124 | 103 | 100 | 24 | n.m. |
| 42 | " | " | " | " | 60/40 | 238 | 238 | 67 | 123 | 100 | 99 | 22 | n.m. |
| 43 | " | " | " | " | 30/70 | 238 | 238 | 67 | 118 | 97 | 94 | 29 | n.m. |
| 44 | " | " | " | " | 0/100 | --- | 238 | 65 | 111 | 92 | 2.1 | 82 | -330 |
| 45 | 2 | 7 | 76 | 32 | 100/0 | 238 | 249 | 70 | 146 | 121 | 0.7 | 91 | 420 |
| 46 | " | " | " | " | 90/10 | 238 | 249 | 68 | 141 | 116 | 23 | 68 | 300 |
| 47 | " | " | " | " | 80/20 | 238 | 249 | 66 | 137 | 111 | 75 | 40 | 230 |
| 48a | " | " | " | " | 70/30 | 238 | 246 | 65 | 132* | 107 | 94 | 28 | 100 |
| 48b | " | " | " | " | " " | " | 257 | 67 | " | 108 | 96 | 27 | 100 |
| 48c | " | " | " | " | " " | " | 266 | 66 | " | 108 | 97 | 27 | 100 |
| 49 | " | " | " | " | 70/30 | 249 | 246 | 68 | 134 | 107 | 89 | 31 | 140 |
| 50 | " | " | " | " | 70/30 | 261 | 246 | 67 | 132 | 109 | 90 | 30 | 110 |
| 51 | " | " | " | " | 60/40 | 238 | 243 | 66 | 129* | 105 | 97 | 26 | 0 |
| 52 | " | " | " | " | 30/70 | 238 | 238 | 66 | 117 | 98 | 99 | 26 | -170 |
| 53 | " | " | " | " | 0/100 | 239 | 238 | 64 | 111 | 90 | 1.8 | 78 | -350 |
| 54 | 3 | 7 | 89 | 32 | 100/0 | 250 | 260 | 70 | 160 | 136 | 1.3 | 91 | 520 |
| 55 | " | " | " | | 90/10 | 250 | 249 | 69 | 117/159 | 135 | 26 | 64 | 500 |
| 56 | " | " | " | | 80/20 | 248 | 249 | 69 | 116/160 | 125 | 74 | 40 | 340 |
| 57a | " | " | " | | 70/30 | 249 | 243 | 65 | 118/159 | 124 | 89 | 32 | 230 |
| 57b | " | " | " | | " " | " | 254 | 67 | " | 115 | 93 | 30 | 170 |
| 57c | " | " | " | | " " | " | 288 | 66 | " | 123 | 96 | 33 | 140 |
| 58 | " | " | " | | 70/30 | 261 | 243 | 67 | 116/159 | 118 | 88 | 32 | 230 |
| 59 | " | " | " | | 70/30 | 273 | 243 | 66 | 116/158 | 121 | 32 | 52 | 190 |
| 60 | " | " | " | | 60/40 | 249 | 243 | 66 | 117/158 | 109 | 97 | 29 | 90 |
| 61 | " | " | " | | 30/70 | 249 | 238 | 63 | 115/155 | 99 | 99 | 29 | -200 |
| 62 | " | " | " | " | 0/100 | --- | 232 | 63 | 111 | 93 | 2.1 | 81 | -290 |

*very broad transition (onset-midpt). ≥ 10°C

Examples 63 to 65 (Table V) - POLYGLUTARIMIDE-SAN BLENDS

Examples 63 to 65 demonstrate that low-birefringence, heat-resistant glutarimide polymer (76% imidization

level, 6.4% N) /SAN blends exist which have good clarity over a wide range of molding temperatures (Ex. 64 a-e). High molding temperatures are often desirable when injection molding parts for minimal molded in stress and/or birefringence. These examples were prepared in the same fashion as Examples 19 to 27, except that a slightly different styrene-acrylonitrile copolymer (Example 8 & Table II) was employed. Parts were molded as in Example 10-35. The blend compositions, processing conditions, and their physical properties are presented in Table V. The blend compositions, processing conditions, and their physical properties are presented in Table V.

Table V

| Water Ex. | Imide Source Metal (Ex. #) | SAN Source Abrasion (Ex. #) | wt % Imide in Imide | wt% AN in SAN | Imide/SAN Wt. Ratio | Extrusion Barrel Temp. (°C) | Injection Molding Barrel Temp. (°C) | Injection Molding Mold Temp. (°C) | Tg (°C) | DTUFL (°C) | % Haze | % TWLT | RTD. (nm/ plaque) | % Uptake | Adhesion | |
|---|---|---|---|---|---|---|---|---|---|---|---|---|---|---|---|---|
| 63 | 2 | 8 | 76 | 24 | 100/0 | 242 | 249 | 71 | n.m. | 121 | 2.1 | 93 | 250 | n.m. | n.m. | n.m. |
| 64a | " | " | " | " | 80/20 | 232 | 241 | 69 | n.m. | 108 | 1.0 | 93 | 90 | n.m. | n.m. | n.m. |
| 64b | " | " | " | " | 80/20 | " | 254 | 69 | n.m. | 110 | 0.9 | 93 | 50 | n.m. | n.m. | n.m. |
| 64c | " | " | " | " | 80/20 | " | 271 | 69 | n.m. | 112 | 1.0 | 93 | 30 | n.m. | n.m. | n.m. |
| 64d | " | " | " | " | 80/20 | " | 293 | 69 | n.m. | n.m. | 0.9 | 92 | 20 | n.m. | n.m. | n.m. |
| 64e | " | " | " | " | 80/20 | " | 318 | 69 | n.m. | n.m. | 1.3 | 92 | 40 | n.m. | n.m. | n.m. |
| 65 | " | " | " | " | 0/100 | 221 | 232 | 61 | n.m. | 90 | 6.0 | 91 | -190 | n.m. | n.m. | n.m. |

Examples 66 to 70 - POLYGLUTARIMIDE-SAN BLENDS

Examples 66 to 70 demonstrate that low optical-retardation, high-clarity glutarimide polymer/SAN blends exist for imides of high weight % glutarimide and low-MW. These examples were prepared in the same fashion as Examples 63 to 65, except that the glutarimide of Example 4 was employed. Parts were molded as in Examples 10-35. The blend compositions, processing conditions, and their properties are presented in Table VI.

Table VI

| Ex. | Imide Source (Ex. #) | SAN Source (Ex. #) | wt % Imide in Imide | wt% AN in SAN | Imide/SAN Wt. Ratio | Extrusion Barrel Temp. (°C) | Injection Molding Barrel Temp. (°C) | Injection Molding Mold Temp. (°C) | Tg (°C) | DTUFL (°C) | % Haze | TWLT | Retardation^^ (nm/plaque) |
|---|---|---|---|---|---|---|---|---|---|---|---|---|---|
| 66 | 4 | 8 | 84 | 24 | 100/0 | 251 | 254 | 74 | 154 | n.m. | 1.0 | 89 | 110 |
| 67 | " | " | " | " | 80/20 | 238 | 246 | 74 | n.m. | n.m. | 1.0 | 89 | 10 |
| 68 | " | " | " | " | 65/35 | 238 | 243 | 74 | n.m. | n.m. | 1.3 | 89 | -70 |
| 69 | " | " | " | " | 50/50 | 238 | 241 | 71 | n.m. | n.m. | 1.3 | 89 | -130 |
| 70 | " | " | " | " | 0/100 | 238 | 227 | 66 | n.m. | n.m. | 1.4 | 90 | -320 |

Examples 71 to 83 - POLYGLUTARIMIDE-SAN BLENDS

Examples 71 to 83 demonstrate the excellent overall property balance for optical applications exhibited by glutarimide polymer (77% imidization, 6.5% N)/SAN blends. Consideration of Example 73 and 74 reveals that blend compositions disclosed in this invention offer lower moisture absorption and extremely low optical retardation in combination with good heat resistance, good adhesion to sputtered aluminum and fair scratch resistance. By contrast, conventional SAN (Ex. 71) exhibits superior moisture absorption and good adhesion to sputtered aluminum, but suffers from high birefringence (optical retardation), lower heat resistance, and poor scratch resistance. Relative to the materials of this invention, neat glutarimide polymer (Ex. 79) exhibits comparable scratch resistance and superior heat resistance, but, due to high moisture adsorption, the heat resistance advantage disappears in high-moisture atmosphere (see Vicat Heat Resist., 50°C Immersion). The glutarimide further suffers from high birefringence and very poor adhesion to sputtered aluminum. Polymethyl methacrylate (Ex. 80 and 81 ) exhibits excellent light transmission, very good scratch resistance and low optical retardation, but suffers from lower heat resistance, and shows very poor adhesion to sputtered aluminum. Polycarbonate (Ex. 82 and 83) exhibits moderate to high optical retardation and poor scratch resistance. The blends of examples 71-79 were prepared in the same fashion as Examples 10-19, except that the glutarimide employed is that of Example 5 and the SAN was that of Example 9. The blend compositions and processing conditions are presented in Table VII. Parts were molded as in Examples 10-35. Physical properties, such as optical, abrasion resistance and moisture absorption, of the blends and comparative examples 80 to 83 are presented in Table VIII.

Table VII

| Ex. | Imide Source (Ex. #) | SAN Source (Ex. #) | wt % Imide in Imide | wt% AN in SAN | Imide/SAN Wt. Ratio | Extrusion Barrel (°C) | Injection Barrel Temp. (°C) | Injection Molding Mold Temp. (°C) | Taber Molding Barrel (°C) | Taber Molding Mold Temp. | I.M. Temp. (°C) | I.M. Temp. |
|---|---|---|---|---|---|---|---|---|---|---|---|---|
| 71 | 5 | 9 | 77 | 23 | 0/100 | 221 | 227 | 66 | 232 | | 66 | |
| 72 | " | " | " | " | 25/75 | 232 | 229 | 68 | --- | | --- | |
| 73 | " | " | " | " | 55/45 | 232 | 243 | 68 | --- | | --- | |
| 74 | " | " | " | " | 70/30 | 232 | 243 | 68 | 243 | | 71 | |
| 75 | " | " | " | " | 80/20 | 232 | 246 | 68 | 243 | | 71 | |
| 76 | " | " | " | " | 90/10 | 238 | 249 | 71 | 254 | | 71 | |
| 77 | " | " | " | " | 95/5 | 238 | 249 | 71 | 254 | | 71 | |
| 78 | " | " | " | " | 98/2 | 238 | 254 | 71 | 254 | | 71 | |
| 79 | " | " | " | " | 100/0 | 238 | 254 | 71 | 254 | | 71 | |
| 80 | -- | -- | -- | -- | PMMA | ---- | 243 | 63 | 232 | | 66 | |
| 81 | -- | -- | -- | -- | PSR-12C | ---- | | | --- | | --- | |
| 82 | -- | -- | -- | -- | CD-2000 | ---- | | | --- | | --- | |
| 83 | -- | -- | -- | -- | PC 2558 | ---- | --- | --- | 304 | | 93 | |

Table VIII

| Adhes. Ex. Cycles | Increase Imide/San Wt.Ratio | % Haze | % TWLT | RTD. (nm/ plaque) | % Water Uptake 23°C/ 50% RH | %Water Uptake 50°C/ Imm. | Tg (°C) | DTUFL (°C) | Vicat Heat Resist. (Dry) | Vicat Heat Resis. (50%RH) | Vicat Heat Resis. (50C Im.) | Approx. Sputt. Al Adhes. Slow Peel Unscored | Approx. Sputt. Al. Fast Peel Scored | %Haze Taber 10 |
|---|---|---|---|---|---|---|---|---|---|---|---|---|---|---|
| 71 | 0/100 | 2.2 | 87 | -250 | 0.27 | 0.71 | 110 | 89 | 110 | 106 | 101 | 100% | 100% | 22 |
| 72 | 25/75 | 2.1 | 87 | -180 | 0.37 | 1.00 | 116 | 98 | 118 | 113 | 106 | n.m. | n.m. | n.m. |
| 73 | 55/45 | 1.1 | 88 | -80 | 0.55 | 1.55 | 126 | 105 | 129 | 123 | 112 | 100% | 50% | n.m. |
| 74 | 70/30 | 0.8 | 89 | 30 | 0.64 | 1.92 | 133 | 108 | 135 | 127 | 113 | n.m. | n.m | 14 |
| 75 | 80/20 | 0.7 | 89 | 110 | 0.75 | 2.23 | 137 | 112 | 138 | 128 | 113 | n.m. | n.m. | 14 |
| 76 | 90/10 | 0.6 | 89 | 250 | 0.84 | 2.61 | 141 | 117 | 143 | 132 | 114 | n.m. | n.m. | 13 |
| 77 | 95/5 | 0.5 | 90 | 350 | 0.89 | 2.82 | 144 | 116 | 145 | 134 | 114 | n.m. | n.m. | 15 |
| 78 | 98/2 | 0.5 | 90 | 340 | 0.91 | 2.94 | 145 | 118 | 146 | 134 | 113 | n.m. | n.m. | 15 |
| 79 | 100/0 | 0.4 | 90 | 340 | 0.93 | 3.04 | 146 | 124 | 147 | 135 | 114 | 0% | 0% | 13 |
| 80 | PMMA | 0.7 | 92 | -30 | 0.65 | 2.20 | n.m. | 90 | 117 | 112 | 100 | n.m. | n.m. | 8 |
| 81 | PSR-12C | | | | | | | | n.m. | n.m. | n.m. | 0% | 0% | n.m. |
| 82 | CD-2000 | | | | | | | | n.m. | n.m. | n.m. | | | n.m. |
| 83 | PC2558 | n.m. | n.m. | n.m. | n.m. | n.m. | n.m. | n.m. | n.m. | n.m. | n.m. | | | 22 |

Examples 84 to 87 - POLYGLUTARIMIDE-SAN BLENDS

Examples 84 to 87 demonstrate the influence of SAN level upon the adhesion of sputtered aluminum to the glutarimide (76% imidization, 6.4%N) /SAN blends of this invention. The blends of Examples 84-87 were prepared in the same fashion as Examples 63 to 65. Plaques (3 x 2 x 1/8 in) were molded as in Examples 10-35. Results are shown in Table IX.

Table IX

| Ex. | Imide Source (Ex. #) | SAN Source (Ex. #) | wt % Imide in Imide | wt% AN in SAN | Wt. Ratio | Extrusion Barrel Imide/SAN (°C) | Injection Barrel (°C) | Injection Molding Mold Temp. (°C) | Injection Molding Al Adhes. Temp. Unscored | Approx. Molding Sputt. Al Adhes. Temp. Scored | Approx. Sputt. Temp. | Approx. Slow Peel | Sputt. Fast Peel |
|---|---|---|---|---|---|---|---|---|---|---|---|---|---|
| 84 | 2 | 8 76 | | 24 | 50/50 | 238 | 238 | 71 | 100% | 100% | | | |
| 85 | " | " " | | " | 60/40 | 238 | 238 | 71 | 100% | 95% | | | |
| 86 | " | " " | | " | 70/30 | 238 | 241 | 71 | 100% | 50% | | | |
| 87 | " | " " | | " | 80/20 | 238 | 241 | 74 | 50% | 0% | | | |

**Claims**

1. A polymer blend consisting substantially of
(a) from 40 to 85 parts by weight of glutarimide polymer containing imide units of the structural formula

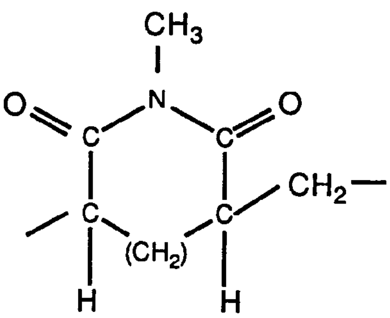

wherein the degree of imidization of the glutarimide polymer is at least 40%, and where the milliequivalents of acid and anhydride per gram of glutarimide polymer does not exceed 0.40;
(b) from 60 to 15 parts by weight of styrene (and/or substitute styrene)-(meth) acrylonitrile copolymer, and
(c) optionally, one or more additives selected from stabilizers, colorants, pigments, lubricants and antistatic agents and
the blend being such that, when molded, it yields a shaped (molded) part having a single glass transition temperature (Tg) and which is clear and has optical retardation not greater than about -120 to +120 nanometers per 0.3175 cm thickness of molded part.

2. A polymer blend as claimed in Claim 1 wherein the blend is such that, when molded it yields a molded part having a total white light transmittance of not less than 85%

3. A polymer blend as claimed in Claim 1 or 2 wherein the degree of imidization of the glutarimide polymer is from 55% to 75%.

4. A polymer blend of any preceding Claim wherein the styrene-acrylonitrile copolymer contains from 20% acrylonitrile to 29% acrylonitrile by weight.

5. The polymer blend of any preceding Claim wherein the glutarimide polymer has a degree of imidization from 50% to 95%.

6. A polymer blend of any preceding Claim such that after molding it yields a molded part having a glass transition temperature from 108°C to 160°C.

7. A polymer blend of any preceding Claim wherein the degree of imidization of glutarimide polymer is from 55% to 75%.

8. A shaped article formed from a blend of any preceding Claim.

9. An article as claimed in Claim 8 having an optical retardation of not more than plus or minus 120 nanometers.

10. An article as claimed in Claim 8 or 9 having a percent haze not greater than 2%.

European Patent Office

# EUROPEAN SEARCH REPORT

Application Number

EP 92 30 4358

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | US-A-4 436 871 (STAAS)<br>* claims *<br>--- | 1-10 | C08L33/24<br>C08L25/12<br>//(C08L33/24,25:12) |
| Y | EP-A-0 013 485 (ROHM AND HAAS COMP)<br>* page 2, line 15 - line 24 *<br>----- | 1-10 | |
| | | | TECHNICAL FIELDS SEARCHED (Int. Cl.5) |
| | | | C08L |

The present search report has been drawn up for all claims

| Place of search | Date of completion of the search | Examiner |
|---|---|---|
| THE HAGUE | 18 AUGUST 1992 | D. Schüler |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)